# EUROPEAN PATENT SPECIFICATION

(11) **EP 4 144 796 B1**
(45) Date of publication and mention of the grant of the patent: **23.04.2025**
(21) Application number: 21894940.2
(22) Date of filing: 28.10.2021
(51) Int. Cl.: C08L 25/08, C08L 57/02, C08L 21/00, C08K 5/37, C08K 3/06, C08J 5/18, B60C 1/00

(54) **RESIN COMPOSITION, PRODUCTION METHOD FOR SAME, RUBBER COMPOSITION COMPRISING RESIN COMPOSITION, GAS BARRIER FILM COMPRISING SAME, AND TYRE COMPRISING GAS BARRIER FILM**
HARZZUSAMMENSETZUNG, HERSTELLUNGSVERFAHREN DAFÜR, KAUTSCHUKZUSAMMENSETZUNG MIT DER HARZZUSAMMENSETZUNG, GASSPERRFOLIE DAMIT UND REIFEN MIT DER GASSPERRFOLIE
COMPOSITION DE RÉSINE, SON PROCÉDÉ DE PRODUCTION, COMPOSITION DE CAOUTCHOUC COMPRENANT UNE COMPOSITION DE RÉSINE, FILM BARRIÈRE AU GAZ LA COMPRENANT, ET PNEU COMPRENANT UN FILM BARRIÈRE AU GAZ

(30) Priority: 20.11.2020 KR 20200156932
(43) Date of publication of application: 08.03.2023
(73) Proprietor: Kolon Industries, Inc., Seoul 07793 (KR)
(72) Inventor: LEE, Joong Suk, Seoul 07793 (KR); JUNG, Hye Min, Seoul 07793 (KR); PARK, Su Yeoun, Seoul 07793 (KR)
(74) Representative: Vossius & Partner Patentanwälte Rechtsanwälte mbB
(86) International application number: PCT/KR2021/015344
(87) International publication number: WO 2022/108169

(56) References cited:
- EP-A1- 2 623 526
- EP-A1- 3 117 990
- JP-A- 2009 256 504
- JP-A- 2019 218 416
- JP-B2- 3 130 995
- KR-B1- 101 919 722
- KR-B1- 102 047 637
- KR-B1- 102 110 151
- KR-B1- 102 155 698
- US-A1- 2013 244 367

## Description

### TECHNICAL FIELD

The present invention relates to a resin composition of novel composition, a method of preparing the same, a rubber composition including the resin composition, a gas-barrier film including the same, and a tire including the gas-barrier film.

### BACKGROUND ART

The inner liner for a tire is a rubber layer situated on the innermost side of the tire structure, which serves to maintain air pressure inside the tire and has flexibility resistance and is required to have excellent adhesion to neighboring support structures (e.g., carcass). Of such tire inner liners, research on a tire inner liner for maintaining endurance performance of flexibility resistance while maintaining the air pressure inside the tire has been continuously conducted.

Currently, to increase resistance to air permeation of tire inner liners, techniques such as increasing the thickness of the rubber layer or increasing the content of halogenated butyl rubber are utilized. However, when the thickness of the inner liner increases, the total weight of the tire also increases, thus causing a decrease in fuel efficiency. Also, since increasing the content of halogenated butyl rubber which has excellent resistance to air permeation or using the halogenated butyl rubber alone as a base rubber decreases processability in tire manufacturing, the problem of increased manufacturing cost still remains.

In an attempt to address this problem, the technique for preparing rubber compositions for inner liners by mixing halogenated butyl rubber with natural rubber and adding a process oil, a processing aid agent, and a filler (organic and/or inorganic filler) has been investigated. However, compounding with other materials other than the halogenated butyl rubber causes a decrease in resistance to air permeation of the halogenated butyl rubber.

That is, manufacturing processability and resistance to air permeation are in a trade-off relationship, and methods to simultaneously improve them both have been continuously investigated.

Accordingly, there is a demand for a resin composition for producing a rubber for inner liners, with improved resistance to air permeation and manufacturing processability.

In addition, since compounding of butyl rubber alone is difficult, the proportion of natural rubber when compounding is increased and other materials such as process oils, processing aid agents, and fillers (organic and inorganic fillers) are used to compound the rubber for inner liners. Introduction of any other materials, other than butyl rubber, is inevitably disadvantageous in terms of resistance to air permeation. In this regard, in order to reduce gas permeability, an amorphous high-viscosity semi-solid hydrocarbon resin, which has excellent processability due to its nonpolarity and small molecular weight, and which is capable of being compatibilized in the amorphous region of polymers to form a film, may be applied to an inner liner to simultaneously improve processability and resistance to air permeation.

### DESCRIPTION OF EMBODIMENTS

### TECHNICAL PROBLEM

Provided are a resin composition having improved resistance to air permeation and manufacturing processability, a method of preparing the same, a rubber composition and a gas-barrier film including the same, and a tire including the same.

### SOLUTION TO PROBLEM

According to one aspect, provided is a resin composition including a base resin including a non-hydrogenated or at least partially hydrogenated petroleum resin; and an additive including a modified petroleum resin having a structure in which a molecular weight modifier is bonded to at least one end of the two ends of a non-hydrogenated or at least partially hydrogenated petroleum resin.

According to another aspect, provided is a rubber composition including a rubber base; and the resin composition, wherein the resin composition is included in an amount of 1 to 50 parts by weight with respect to 100 parts by weight of the rubber base.

According to another aspect, a gas-barrier film including the rubber composition is provided.

According to another aspect, a tire including the gas-barrier film is provided.

According to another aspect, provided is a method of preparing a resin composition, including obtaining a resin in a semi-solid state by blending, at a temperature of 100 °C to 180 °C, a base resin including a non-hydrogenated or at least partially hydrogenated petroleum resin; and an additive including a modified petroleum resin having a structure in which a molecular weight modifier is bonded to at least one end of the two ends of a non-hydrogenated or at least partially hydrogenated petroleum resin.

### ADVANTAGEOUS EFFECTS OF DISCLOSURE

A resin composition according to an embodiment of the present invention, despite containing no process oils, due to including an additive including a modified petroleum resin modified by a molecular weight modifier, may facilitate dispersion of components during a compounding process of the components and reduce the compounding time, and thus may provide economic advantages. Further, the resin composition has excellent compatibility with rubber so that a gas-barrier film prepared therefrom has improved resistance to air permeation.

### BRIEF DESCRIPTION OF DRAWINGS

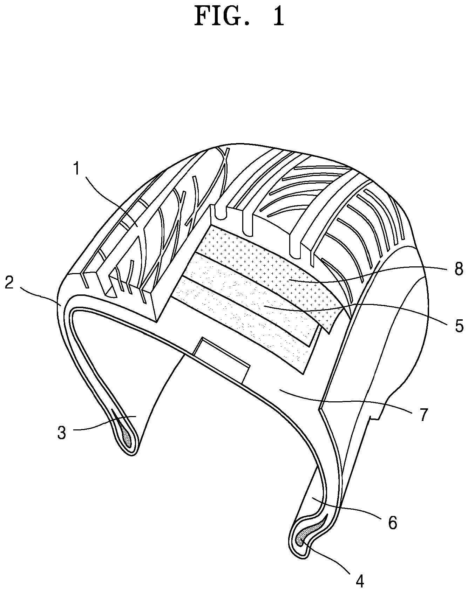

FIG. 1 is a schematic diagram representing a basic structure of a tire.

### MODE OF DISCLOSURE

The present inventive concept, which will be more fully hereinafter, may have various variations and various embodiments, and specific embodiments will be illustrated in the accompanied drawings and described in greater details. However, the inventive concept should not be construed as limited to specific embodiments set forth herein. Rather, these embodiments are to be understood as encompassing all variations, equivalents, or alternatives included in the scope of this inventive concept.

The terminology used herein is for the purpose of describing particular embodiments only and is not intended to limit the inventive concept. As used herein, the singular forms "a," "an" and "the" are intended to include the plural forms as well, unless the context clearly indicates otherwise. As used herein, the terms "comprises" and/or "comprising," or "includes" and/or "including" when used in this specification, specify the presence of stated features, regions, integers, steps, operations, elements, components, ingredients, materials, or combinations thereof, but do not preclude the presence or addition of one or more other features, regions, integers, steps, operations, elements, components, ingredients, materials, or combinations thereof. As used herein, "/" may be interpreted as "and", or as "or" depending on the context.

In the drawings, the thicknesses of layers and regions may be exaggerated for clarity and convenience of description. Like reference numerals denote like elements throughout the specification. When a component, such as a layer, a film, a region, or a plate, is described as being "above" or "on" another component, the component may be directly above the another component, or there may be yet another component therebetween. It will be understood that although the terms "first," "second," etc. may be used herein to describe various elements, these elements should not be limited by these terms. These terms are only used to distinguish one element from another element.

Scientific terms used in the present specification, unless otherwise defined, may be understood as generally understood by one of ordinary skill in the art in the technical field to which the present invention belongs.

In the present specification, the term 'petroleum resin' includes a polymer in which one or more selected from among C₅ monomers, mixed C₅ fraction, C₉ monomers, mixed C₉ fraction, cyclic diolefin monomers and linear olefin monomers, are polymerized. For example, the petroleum resin includes homopolymers, copolymers, and the like. Examples of the homopolymers of the petroleum resin may include a polymer in which C₅ monomers are polymerized, a polymer in which mixed C₅ fractions are polymerized, a polymer in which C₉ monomers are polymerized, a polymer in which mixed C₉ fractions are polymerized, a polymer in which cyclic diolefin monomers are polymerized, and a polymer in which linear olefin monomers are polymerized. Examples of the copolymers of the petroleum resin may include a copolymer in which two different C₅ monomers are polymerized, a copolymer in which two different C₉ monomers are polymerized, a copolymer in which two different cyclic diolefin monomers are polymerized, a copolymer in which two different linear diolefin monomers are polymerized, a copolymer of C₅ fraction and a C₅ monomer, a copolymer of C₅ fraction and a C₉ monomer, a copolymer of C₉ fraction and a C₅ monomer, a copolymer of a C₅ monomer and a C₉ monomer, a copolymer of C₉ fraction and a C₉ monomer, a copolymer of C₅ fraction and a linear olefin monomer, a copolymer of C₉ fraction and a linear olefin monomer, a copolymer of C₅ fraction and a cyclic diolefin monomer, a copolymer of C₉ fraction and a cyclic diolefin monomer, a copolymer of a C₅ monomer and a cyclic diolefin monomer, a copolymer of a C₉ monomer and a linear olefin monomer, and a copolymer of a cyclic diolefin monomer and a linear olefin monomer.

In the present specification, the term "hydrogenated hydrocarbon resin(s)" refers to a petroleum resin among the aforementioned petroleum resins, in which unsaturated moieties e.g. ethylene, are partially modified to saturated hydrocarbons via hydrogenation.

In the present specification, '(mixed) C₅ fraction' includes aliphatic C₅ and C₆ paraffins, olefins and diolefins derived from the cracking of naphtha. For example, the C₅ fraction may include pentene, isoprene, 2-methyl-2-butene, 2-methyl-2-pentene, cyclopentadiene, and piperylene, but is not limited thereto and includes all mixtures of two or more kinds of C₅ monomers. In addition, the C₅ fraction may be optionally alkylated.

In the present specification, 'Cs monomer' refers to any one of components included in the aforementioned (mixed) C₅ fraction.

In the present specification, the term '(mixed) C₉ fraction' as commonly understood in the technical field to which the present invention belongs, is a composition derived from petroleum processing, such as cracking, and includes C₈, C₉ and/or C₁₀ olefins boiling at about 100-300 °C at the atmospheric pressure and for example may include, without being limited to vinyl toluene, α-methylstyrene, styrene, dicyclopentadiene, indene, trans-beta-methylstyrene, and methylindene. In addition, the C₉ fraction may be optionally alkylated. For example, the C₉ fraction in the present invention may include vinyltoluene, indene, styrene, dicyclopentadiene, and alkylated derivatives of the aforementioned components, such as α-methylstyrene, methylindene, and the like.

In the present specification, the term 'C₉ monomer' refers to any one of components included in the aforementioned C₉ fraction.

In the present specification, 'olefin' includes unsaturated compounds including at least one ethylenically unsaturated (C=C) bond. For example, olefins may include, but are not limited to, linear olefins, cyclic olefins, α-olefins, and the like.

In the present specification, 'cyclic-diolefin' includes cyclic unsaturated compounds including two C=C bonds. For example, cyclic-diolefins may include, but are not limited to, dicyclopentadiene, tricyclopentadiene, and the like.

Hereinafter, the resin composition of the present application, a rubber composition and a gas-barrier film including the same, a tire including the gas-barrier film, and a method of preparing the resin composition are described in detail.

### [Resin Composition]

A resin composition according to one aspect includes a base resin including a non-hydrogenated or at least partially hydrogenated petroleum resin; and an additive including a modified petroleum resin having a structure in which a molecular weight modifier is bonded to at least one end of the two ends of a non-hydrogenated or at least partially hydrogenated petroleum resin.

By including the additive in the base resin, processability may be improved and a gas-barrier film prepared therefrom may have improved resistance to air permeation.

According to an embodiment, the petroleum resin may include at least one repeating unit derived from mixed C₉ fraction. For example, the petroleum resin may be composed of repeating units derived from mixed C₉ fraction.

According to an embodiment, a weight ratio of the base resin and the additive in the composition may be 12:1 to 1:12. For example, a weight ratio of the base resin and the additive in the composition may be 11:1 to 1:11, 10:1 to 1:10, or 9:1 to 1:9.

According to an embodiment, the content of the base resin in the resin composition may be equal to or greater than the content of the additive. For example, a weight ratio of the base resin and the additive in the composition may be 12:1 to 1:1. For example, a weight ratio of the base resin and the additive in the composition may be 11:1 to 1:1, 10:1 to 1:1, or 9:1 to 1:1.

As the base resin and the additive satisfy the above content ratios, a resin composition obtained therefrom may have excellent compounding properties and compatibility with rubber base and may be compatibilized in the amorphous region of a rubber base for tire inner liners to form a film, thereby improving resistance to air permeation.

According to an embodiment, the base resin may have a weight average molecular weight (Mw) of 200 to 2,000, a softening point of 80 °C to 150 °C, and a viscosity at 160 °C of 250 to 2,000 cps, and a glass transition temperature of 30 °C to 100 °C.

For example, the base resin may have a weight average molecular weight (Mw) of 400 to 1,000, a softening point of 90 °C to 120 °C, and a viscosity at 160 °C of 500 to 1,000 cps, and a glass transition temperature of 40 °C to 70 °C.

According to an embodiment, the base resin may be a petroleum resin including a polymer in which one or more selected from among C₅ monomers, mixed C₅ fraction, C₉ monomers, mixed C₉ fraction, cyclic diolefin monomers and linear olefin monomers, are polymerized.

According to an embodiment, the base resin may be a petroleum resin including a copolymer of two components selected from among C₅ monomers, mixed C₅ fraction, C₉ monomers, mixed C₉ fraction, cyclic diolefin monomers and linear olefin monomers. For example, the base resin may include a copolymer of mixed C₉ fraction and cyclic-diolefin.

According to an embodiment, the base resin may include a C₉-DCPD copolymer. For example, the petroleum resin may be a C₉-DCPD copolymer resin.

According to an embodiment, the base resin may be a hydrogenated petroleum resin obtained by hydrogenation of a copolymer of two components selected from among C₅ monomers, mixed C₅ fraction, C₉ monomers, mixed C₉ fraction, cyclic diolefin monomers and linear olefin monomers. For example, the base resin may include a hydrogenated C₉-cyclic-diolefin based resin in which ethylene groups in a copolymer of mixed C₉ fraction and cyclic-diolefin are hydrogenated.

According to an embodiment, the base resin may include a hydrogenated C₉-DCPD copolymer. For example, the base resin may be a hydrogenated C₉-DCPD copolymer resin.

According to an embodiment, the molecular weight modifier may be a chain transfer agent, thiols or halocarbons such as carbon tetrachlorides.

According to an embodiment, the molecular weight modifier may include an organic mercaptan-based molecular weight modifier including thiols, e.g., one or more thiol groups. For example, the organic mercaptan-based molecular weight modifier includes an aliphatic mercaptan-based compound, a cyclic aliphatic mercaptan-based compound, an aromatic mercaptan-based compound, or a combination thereof.

According to an embodiment, the number of thiol groups included in the organic mercaptan-based molecular weight modifier is not particularly limited, but 1 to 4 thiol groups may be included per molecule, and per one thiol group, a hydrocarbon group containing 1 to 20 carbon atoms, preferably 1 to 15 carbon atoms, may be included.

In addition, other substituent groups other than the hydrocarbon group and thiol groups may be further included. Examples of such substituent groups include a hydroxyl group, a carboxylic acid group, an ether group, an ester group, a sulfide group, an amine group, an amide group, and the like.

According to an embodiment, the molecular weight modifier is any organic compound containing a thiol group, and for example, may include: alkyl mercaptans such as ethyl mercaptan, butyl mercaptan, hexyl mercaptan, or dodecyl mercaptan; thiol phenols such as phenyl mercaptan or benzyl mercaptan; mercaptans containing a hydroxyl group or a carboxylic acid group, such as 2-mercaptoethanol, thioglycolic acid, or 3-mercaptopropionic acid; or mercaptans having two or more functional groups, such as pentaerythritol tetrakis(3-mercapto)propionate; or mixtures thereof.

For example, the molecular weight modifier may include, without being limited to, methyl mercaptan, ethyl mercaptan, butyl mercaptan, octyl mercaptan, lauryl mercaptan, mercaptoethanol, mercaptopropanol, mercaptobutanol, mercaptoacetic acid, mercaptopropionic acid, benzyl mercaptan, phenyl mercaptan, cyclohexyl mercaptan, 1-thioglycerol, 2,2'-dimercaptodiethyl ether, 2,2'-dimercaptodipropyl ether, 2,2'-dimercaptodiisopropyl ether, 3,3'-dimercaptodipropyl ether, 2,2'-dimercaptodiethyl sulfide, 3,3'-dimercaptodipropyl sulfide, bis(β-mercaptoethoxy) methane, bis(β-mercaptoethylthio)methane, trimethylolpropane trithioglycolate, pentaerythritol tetrathioglycolate, or a mixture thereof.

For example, the molecular weight modifier may include ethyl mercaptan, butyl mercaptan, hexyl mercaptan, dodecyl mercaptan, phenyl mercaptan, benzyl mercaptan; mercaptoethanol, thiolglycolic acid, mercaptopropionic acid, pentaerythritol tetrakis(3-mercapto)propionate, or a mixture thereof.

According to an embodiment, the molecular weight modifier may maximize the effect of molecular weight control by using n-dodecyl mercaptan of Formula 1, or 2-mercaptoethanol of Formula 2, or a mixture thereof.

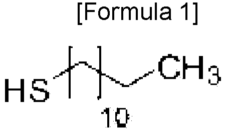

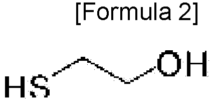

According to an embodiment, the additive may further include a viscosity modifier.

According to an embodiment, the viscosity modifier may include a low-viscosity resin having a viscosity at 25 °C of 20 cps to 500 cps. For the viscosity modifier, any resin that satisfies the above viscosity may be used without any particular limitation.

For example, the low-viscosity resin may include a hydrogenated DCPD-C₉ copolymer resin, a hydrogenated DCPD resin, or a mixture thereof.

Here, the hydrogenated DCPD-C₉ copolymer resin refers to a white-colored thermoplastic resin obtained via polymerization and hydrogenation of dicyclopentadiene (DCPD) and as such a hydrogenated DCPD-C₉ copolymer, a commercial resin e.g., SUKOREZ^{™} resin, may be used.

According to an embodiment, the viscosity modifier may include a hydrogenated DCPD-C₉ copolymer resin having the structure below, and as a result, improvements in viscosity control and resistance to air permeation can be maximized.

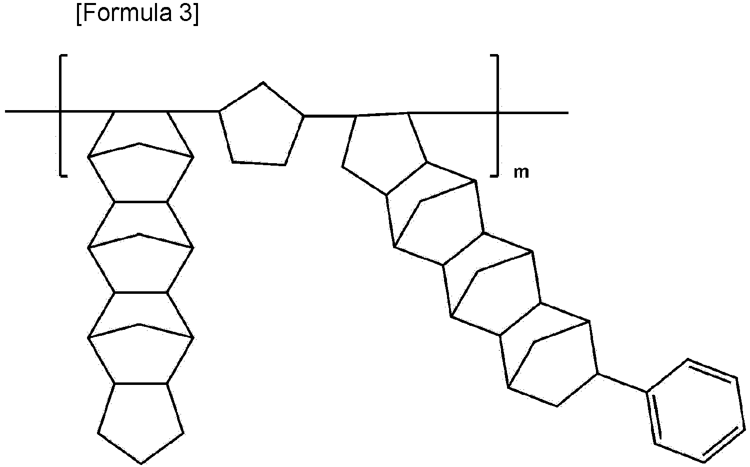

A modified petroleum resin according to an embodiment is a petroleum resin which is modified by the molecular weight modifier, wherein the petroleum resin has polymerized one or more from among C₅ monomers, mixed C₅ fraction, C₉ monomers, mixed C₉ fraction, cyclic diolefin monomers, and linear olefin monomers and is non-hydrogenated or at least partially hydrogenated. By end-group modification with a molecular weight modifier, the petroleum resin not only has excellent compounding properties and compatibility with rubber, but also can be compatibilized in the amorphous region of polymers to form a film, to thereby further improve processability and resistance to air permeation. Meanwhile, when end-group modification by a molecular weight modifier is not conducted, compatibility with rubber may be low due to high nonpolarity, thus causing difficulty in compounding. As a result, processability and performance of the final product may deteriorate.

According to another embodiment, as the modified petroleum resin includes at least one repeating unit derived from mixed C₉ fraction and the modified petroleum resin is end-group modified by the molecular weight modifier, compounding properties and compatibility with rubber may be further improved, and as a result, processability and resistance to air permeation may be further improved.

As will be further described below, the modified petroleum resin according to an embodiment has a structure in which one or more selected from among the C₅ monomers, mixed C₅ fractions, C₉ monomers, mixed C₉ fractions, cyclic diolefin monomers and liner olefin monomers, are polymerized via addition polymerization or chain polymerization, and the molecular weight modifier is bonded to at least one end of the two ends of a non-hydrogenated or at least partially hydrogenated petroleum resin.

The modified petroleum resin may include at least one repeating unit derived from mixed C₉ fraction.

According to an embodiment, the modified petroleum resin may have a structure bonded to a repeating unit as shown in Formula 4a. For example, the modified petroleum resin may include the structure described below, in which components included in mixed C₉ fractions, such as styrene, α-methylstyrene, vinyltoluene, indene, methylindene, dicyclopentadiene and α-methylstyrene or methylindene, and alkylated derivative monomers of the aforementioned components are formed via polymerization.

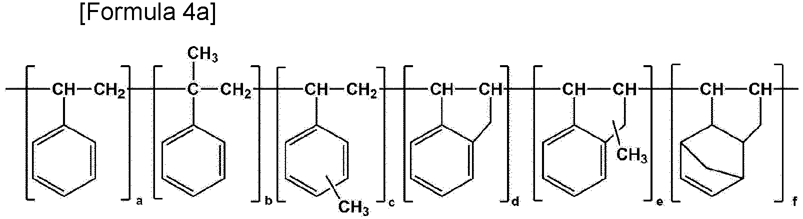

Formula 4a merely represents examples and therefore, other C₅ monomers, C₉ monomers, cyclic-diolefin monomers and linear olefin monomers other than those represented in the above structure may be included as repeating units.

For example, the modified petroleum resin may be a polymer represented by the above structure. The polymer refers to a random polymer, but is not limited thereto and may include a block copolymer, an alternating copolymer, or the like.

Although not illustrated, the modified petroleum resin may include a structure in which at least one of repeating units represented by Formula 4a is hydrogenated.

In another embodiment, the modified petroleum resin may include a structure in which the following repeating units are bonded. For example, the modified petroleum resin may have a structure having a double bond at least one of the two ends thereof, and Formula 4b represents as an example a structure having a double bond at both ends thereof.

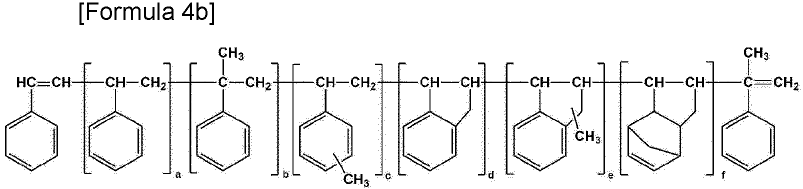

In particular, a double bond positioned at at least one end may be bonded to a molecular weight modifier to form a petroleum resin modified with the molecular weight modifier (for example, a polymer of mixed C₉ fraction). The molecular weight modifier may be bonded to both of the two ends, or may be bonded to only one end thereof, as represented as an example in Formula 4c.

Although not illustrated, the modified petroleum resin may include a structure in which at least one of repeating units represented by Formula 4b or 4c is hydrogenated.

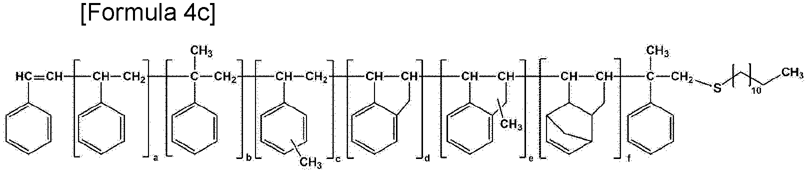

According to an embodiment, an additive including the modified petroleum resin may have a number average molecular weight (Mn) of 200 to 500, and in this range, the modified polymer may exhibit excellent processability and compatibility with rubber base. When the number average molecular weight is less than 200, compounding efficiency may be decreased. When the number average molecular weight exceeds 500, compounding processability may be decreased.

According to an embodiment, an additive containing the modified petroleum resin has excellent processability due to its non-polarity, and due to its low crystallinity, can be compatibilized in the amorphous region of a polymer to form a film, thus further enhancing processability and resistance to air permeation. In particular, the additive may have a viscosity at 60 °C of 2,500 cps to 4,000 cps and a glass transition temperature of -25 °C to -15 °C.

The additive may have a viscosity of 2,700 to 3800, or 3000 to 3500.

When the glass transition temperature of the additive is less than -25 °C, there may be issues with resistance to air permeation. When the glass transition temperature of the additive is higher than -15 °C, there may be issues with low-temperature durability.

According to an embodiment, the additive may have an aromaticity of 20 % to 60 %. For example, the additive may have an aromaticity of 30 % to 50 %, or 35 % to 45 %. When the aromaticity is less than 20 %, compatibility with rubber base may decrease, the improvement effect on resistance to air permeation of the gas-barrier film prepared therefrom may become negligible. When the aromaticity exceeds 60 %, processability may deteriorate due to an increase in glass transition temperature (Tg).

According to an embodiment, the additive may include a modified petroleum resin and a viscosity modifier, and may include 80 wt% to 98 wt% and 2 wt% to 20 wt% of the modified petroleum resin and the viscosity modifier, respectively.

The viscosity modifier serves to control the viscosity of reactants and products without participating in the structure formation of the product polymer. The additive may be obtained by conducting a polymerization reaction, using a polymerization catalyst or addition of heat, in a solution containing a molecular weight modifier, a viscosity modifier, and one or more from among C₅ monomers, mixed C₅ fraction, C₉ monomers, mixed C₉ fraction, cyclic diolefin monomers and linear olefin monomers. Products of this polymerization reaction may be a mixture of modified petroleum resin and a viscosity modifier.

According to an embodiment, the resin composition, as the base resin and the additive are compounded in an appropriate ratio, may have excellent compatibility with rubber base and improved resistance to air permeation.

The resin composition has a number average molecular weight (Mn) of 100 to 550, a glass transition temperature of 0 °C to 60 °C, a softening point of 50 °C to 90 °C, and an aromaticity of 5 % to 35 %.

For example, the resin composition may have a number average molecular weight (Mn) of 150 to 500, 200 to 450, 250 to 400, or 300 to 350.

For example, the glass transition temperature may be 5 °C to 65 °C, 10 °C to 60 °C, 15 °C to 55 °C, 20 °C to 50 °C, 25 °C to 45 °C, or 30 °C to 40 °C.

For example, the softening point may be 55 °C to 85 °C.

For example, the aromaticity may be 10 % to 30 %.

When the resin composition satisfies the physical properties described above, the resin composition may have improved compatibility with rubber and thus excellent resistance to air permeation.

The description above may be referred to for the C₅ monomers, mixed C₅ fraction, C₉ monomers, mixed C₉ fraction, cyclic diolefin monomers, and linear olefin monomers, and various embodiments, such as a molecular weight modifier, a viscosity modifier, and the like, are as described above.

### [Preparation Method for Resin Composition]

A method of preparing the resin composition according to one aspect includes obtaining a resin in a semi-solid state by blending, at a temperature of 100 °C to 180 °C, a base resin including a non-hydrogenated or at least partially hydrogenated petroleum resin; and an additive including a modified petroleum resin having a structure in which a molecular weight modifier is bonded to at least one end of the two ends of a non-hydrogenated or at least partially hydrogenated petroleum resin. Here, the semi-solid state refers to a state between solid and liquid.

According to an embodiment, the content of the base resin and the content of the additive may be in a weight ratio of 12:1 to 1:12. For example, a weight ratio of the base resin and the additive in the composition may be 11:1 to 1:1, 10:1 to 1:1, or 9:1 to 1:1.

According to an embodiment, the content of the base resin may be higher than the content of the additive. For example, the content of the base resin and the content of the additive may have a weight ratio of 9:1 to 5:5.

When the content ratio of the base resin and the additive is within the above ranges, processability and compatibility with rubber base for tire inner liners may be improved, and thus, preparation of a tire inner liner with improved resistance to air permeation may become possible.

According to an embodiment, the additive may further include a viscosity modifier, and details of the viscosity modifier can be found in the above description.

According to an embodiment, the additive may be obtained by conducting a polymerization reaction by adding a polymerization catalyst or/and heat to a solution containing a molecular weight modifier, a viscosity modifier, and one or more from among C₅ monomers, mixed C₅ fraction, C₉ monomers, mixed C₉ fraction, cyclic diolefin monomers and linear olefin monomers.

According to an embodiment, the polymerization catalyst may be selected from among a Lewis acid catalyst, halohydric acid, AlCl₃, BF₃, and a mixture thereof.

For example, the polymerization catalyst may be selected from among AlCl₃, BF₃, SnCl₄, TiCl₄, AgClO₄, I₂, and a mixture thereof.

According to an embodiment, the application of heat may be performed at about 230 °C to about 280 °C.

According to an embodiment, the polymerization reaction of the additive may be conducted under a pressure of 5 to 10 bar for about 1 hour to about 3 hours.

### [Rubber Composition]

According to one aspect, provided is a rubber composition including a rubber base; and the above-described resin composition, wherein the resin composition is included in an amount of 1 to 50 parts by weight with respect to 100 parts by weight of the rubber base.

If the content of the resin composition is less than 1 part by weight, it is difficult to expect an improvement of resistance to air permeation, and if the content of the resin composition exceeds 50 parts by weight, it causes degradation in physical properties of a rubber blend product due to decreased dispersibility when compounding rubber base.

According to an embodiment, the rubber composition may further include a homogenizing agent, a reinforcing agent, a vulcanization aid, sulfur, and a vulcanization accelerator, in addition to the above-described resin composition and rubber base.

According to an embodiment, the rubber composition may further include 1 to 8 parts by weight of a homogenizing agent, 20 to 80 parts by weight of a reinforcing agent, and 0.1 to 10 parts by weight of a vulcanization aid with respect to 100 parts by weight of rubber base.

According to an embodiment, the rubber composition may further include 0.1 to 2 parts by weight of sulfur and 0.5 to 5 parts by weight of a vulcanization accelerator with respect to 100 parts by weight of rubber base.

Hereinbelow, components forming the rubber composition together with the above resin will be described in greater detail.

According to an embodiment, the rubber base is not particularly limited and may be any rubber containing an olefinic double bond (carbon-carbon double bond), and may utilize natural rubber, synthetic rubber, or a mixture thereof.

According to an embodiment, the rubber base may include one or more selected from the group consisting of natural rubber (NR), butadiene rubber, nitrile rubber, silicone rubber, isoprene rubber, styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, halogenated isoprene rubber, halogenated isobutylene copolymers, chloroprene rubber, butyl rubber, and halogenated isobutylene-p-methyl styrene rubber.

For example, the rubber base may include a mixture of natural rubber and synthetic rubber. For example, the rubber base may be a mixture of halogenated butyl rubber (e.g. chlorinated butyl rubber) and natural rubber.

According to an embodiment, the rubber composition may include a homogenizing agent. For the homogenizing agent, 40MS (Strcucktol) may be used, and addition of the homogenizing agent may provide the advantage of increasing the blendability of natural rubber and butyl rubber that are not easily mixed.

According to an embodiment, the rubber composition may include a reinforcing agent. For example, the reinforcing agent may include carbon black. The carbon black due to its high specific surface area, improves the processability of the rubber composition and thus, a film prepared from the final rubber composition may have advantageous effects such as improvement of abrasion resistance, improvement of rotation resistance, and resistance to UV-induced cracking or deterioration.

The carbon black is not limited to any particular type and may be any one commonly used in the tire industry. For example, for the carbon black, carbon black such as furnace black, acetylene black, thermal black, channel black, graphite, may be used.

In addition, physical properties of carbon black, such as particle diameter, pore volume, and specific surface area are not particularly limited, and various carbon blacks conventionally used in the rubber industry, e.g., SAF, ISAF, HAF, FEF, GPF, SRF (all are abbreviations for carbon black classified by ASTM standard D-1765-82a in the United States) or the like may be appropriately used.

The carbon black may be preferably included in an amount of 20 to 80 parts by weight with respect to 100 parts by weight of rubber base. The carbon black is a reinforcing filler and is an essential element in rubber compounding, and if its content is less than the above ranges, the reinforcing effect decreases, whereas its content exceeding the above ranges causes difficulty in dispersion.

According to an embodiment, other than the carbon black, powder of minerals such as silica, clay, and talc, carbonates such as magnesium carbonate and calcium carbonate, and alumina hydrates such as aluminum hydroxide may be used as the reinforcing agent.

According to an embodiment, the rubber composition may include sulfur. The sulfur is not limited to any particular type and may be any sulfur that is capable of using in a vulcanization process. By using sulfur in an amount of 0.1 to 2 parts by weight with respect to 100 parts by weight of the rubber base, a film prepared from the final rubber composition may have improved resistance to air permeation.

According to an embodiment, the rubber composition may include a vulcanization accelerator. Herein, 'vulcanization' refers to a crosslinking which includes at least one sulfur atom. Examples of the vulcanization accelerator may include thiuram-based vulcanization accelerators such as tetramethylthiuram monosulfide, tetramethylthiuram disulfide and tetraethylthiuram disulfide; thiazole-based vulcanization accelerators such as N-t-butyl benzothiazole-2-sulfenamide (TBBS), 2-mercaptobenzothiazole and dibenzothiazole disulfide; sulfenamide-based vulcanization accelerators such as N-cyclohexyl-2-benzothiazylsulfenamide and N-oxydiethylene-2-benzothiazolylsulfenamide; guanidine-based vulcanization accelerators such as diphenylguanidine (DPG) and diorthotriguanidine; aldehyde-amine based vulcanization accelerators such as n-butylaldehyde-aniline condensates and butylaldehyde-monobutylamine condensates; aldehyde-ammonia based vulcanization accelerators such as hexamethylenetetramine; and thiourea-based vulcanization accelerators such as thiocarbanilide. If such a vulcanization accelerator is to be compounded, a single type of the aforementioned vulcanization accelerators may be used, or two or more of the aforementioned vulcanization accelerators may be used in combination. The vulcanization accelerator may be dibenzothiazole disulfide.

By using such a vulcanization accelerator in an amount of 0.5 to 5 parts by weight with respect to 100 parts by weight of the rubber base, a film prepared from the final rubber composition may have improved resistance to air permeation.

According to an embodiment, the rubber composition may include a vulcanization aid. As mentioned above, here 'vulcanization' refers to a crosslinking which includes at least one sulfur atom.

Examples of the vulcanization aid include metal oxides such as zinc oxide (flowers of zinc) and magnesium oxide; metal hydroxides such as calcium hydroxide; metal carbonates such as zinc carbonate and alkaline zinc carbonate; fatty acids such as stearic acid and oleic acid; aliphatic metal salts such as zinc stearate and magnesium stearate; amines such as di(n-butyl)amine and dicyclohexylamine; and ethylene dimethacrylate, diallyl phthalate, N,N-m-phenylenedimaleimide, triallylisocyanurate, trimethylolpropane trimethacrylate, and the like.

When blending, a single type of the aforementioned vulcanization aids may be used, or two or more of the aforementioned vulcanization aids may be used in combination. By using such a vulcanization aid in an amount of 0.1 to 10 parts by weight with respect to 100 parts by weight of the rubber base, a film prepared from the final rubber composition may have improved resistance to air permeation.

According to an embodiment, the rubber composition may further include as necessary, other additives used in the field of rubber industry, for example, an anti-aging agent, a vulcanization retarder, an annealing agent, a plasticizer, and the like. The blending amount of such additives may be preferably 0.1 to 10 parts by weight with respect to 100 parts by weight of the rubber base.

A composition containing the above-described composition may be prepared as a gas-barrier film by a known method. For example, the gas-barrier film may be applied to a tire, for example, as an inner liner.

According to an embodiment, the rubber composition may be prepared by blending the above respective components using a blender such as Plastomill, Banbury mixer, a roll, an internal mixer, and the like.

According to an embodiment, the rubber composition may be prepared by first, among the respective components described above, blending together the components other than sulfur and the vulcanization accelerator, and then additionally blending the blended product thus obtained, with sulfur and the vulcanization accelerator.

The rubber composition prepared by the above method may be utilized as a material constituting a gas-barrier film. The gas-barrier film thus prepared have excellent mechanical properties (hardness, tensile strength, modulus, etc.). In particular, the gas-barrier film thus prepared has excellent resistance to air permeation and therefore may be applied as a film for tire inner liners.

A rubber composition obtained according to an embodiment, prepared as a rubber sample and measured for gas permeability by the KS M ISO 2556 method, may result in a gas permeability or 150 cm³/(m²·day·atm) or less. For example, the gas permeability may be 145 cm³/(m²·day·atm) or less. In addition, the rubber sample may have a glass transition temperature (Tg) of -16 °C or less. The rubber sample, due to having a glass transition temperature of -16 °C or less, may have improved processability and thus can reduce the manufacturing costs and improve physical properties of the final product.

The rubber sample may be prepared using the above rubber composition, by a method commonly used in the art. For example, the rubber composition may be prepared as a sample having a size of 12 cm x 12 cm (width x length) and a thickness of 0.5 mm ± 0.2 mm by compression molding using a hot press, and then measured for gas permeability in an atmosphere of 25 °C, 60 RH%.

The resin composition may be used as an additive for a rubber composition that forms the conventional tires. For example, the resin composition may be included as a resin that replaces a process oil added during the manufacturing process of tire inner liners to improve compatibility of components.

By including the resin composition according to an embodiment of the present invention in place of process oil, a tire inner liner rubber composition according to one aspect of the present invention may improve resistance to air permeation and processability compared to when including the conventional process oil.

For example, the conventionally known process oil is a petroleum oil, which includes a paraffinic oil, a naphthenic oil, an aromatic oil, and a combination thereof.

### [Tire]

FIG. 1 is a schematic diagram showing the structure of a tire.

Referring to FIG. 1, the tire includes a tread part 1, a shoulder part 2, a sidewall part 3, a bead part 4, a belt part 5, an inner liner part 6, a carcass part (7), and a cap ply part (8).

The tread part is a part of the tire that comes in direct contact with road surfaces and is made of rubber having high wear resistance, located on the outside of cap plies. In addition, the tread part serves to improve wet grip and dry grip of the tire of transportation equipment on road surfaces.

The shoulder part is located on the side of the tread between the tread and the sidewall part, and serves to connect the sidewall part and the tread.

The sidewall part is positioned between the tread and the bead part to cover a side portion of the tire. The sidewall part covers the carcass part and thus protects the carcass part from external stimuli, and by keeping the outer shape of the tire from being deformed due to centrifugal force generated in the tire while transportation equipment is operating, may ensure stable operation of the transportation equipment.

The bead part is a region in which a bundle of one or multiple steel wires winding around the end portions of the carcass part is in a twisted state, and the steel wires are completely covered by a rubber film. In addition, the bead part serves to place and fix the tire on the wheel rim. In particular, the bead part serves to keep the tire from separating from the wheel rim when exposed to air.

The belt part is a coating layer located between the tread part and the carcass part. The belt part serves to protect the inner structures, e.g., carcass part, from damage by an external impact or external conditions and also serves to increase the contact surface between the tread part and the road surface.

The inner liner part is located on the innermost side of the tire and serves the function of keeping the air pressure inside the tire constant by preventing the air inside from being released to the outside.

The carcass part is made of high-strength synthetic fibers and serves to form and maintain the shape of a tire. The carcass part serves the function of withstanding the load and impact transmitted during the operation of transportation equipment and maintaining the air pressure.

The cap ply part is a protective layer located below the tread part and serves the function of protecting the internal components from external impacts or heat transmitted from the tread part.

### [Tread part]

The tread part serves the function of increasing the tire's grip on road surfaces. The grip refers to adhesion between the tire and the road surface, and improved levels of grip improve the braking performance of transportation equipment when cornering or stopping.

The tread part may be formed using a rubber composition including a rubber base and a resin. Here, the tread part may include a single layer of a rubber composition or a stack of a plurality of rubber compositions.

The rubber base may include natural rubber, synthetic rubber, or a combination thereof.

For example, the natural rubber may be a common natural rubber or modified natural rubber. Examples of the synthetic rubber include butadiene rubber, nitrile rubber, silicone rubber, isoprene rubber, styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, halogenated isoprene rubber, halogenated isobutylene copolymer, chloroprene rubber, butyl rubber, halogenated isobutylene-p-methyl styrene rubber, or mixtures thereof.

For example, the resin may be selected from among the aforementioned resin composition, a hydrocarbon resin, an alkyl phenol resin, a phenol/acetylene resin, a terpene phenol resin, a rosin-derived resin, and a mixture thereof.

The tread part may further include a tire cord in addition to the rubber composition.

The tire cord may be appropriately selected by a person skilled in the art in view of adhesion to rubber, rigidity and fatigue resistance of the tire, heat resistance and dimensional stability.

Examples of the tire cord include rayon, nylon, polyester, aramid, steel, and the like. The tire cord may have a conductive material mixed therein, as necessary.

The rubber composition for tread may further include a homogenizer, a reinforcing agent, a vulcanization aid, sulfur, and a vulcanization accelerator in addition to rubber base and resin. More information on the homogenizer, reinforcing agent, vulcanization aid, sulfur, and vulcanization accelerator can be found in the description in the present specification.

In addition, various additives such as vegetable oils, an anti-aging agent, and the like, may be further included as necessary.

The contents of components included in the rubber composition for tread may be appropriately selected and implemented for desired properties, by a person skilled in the art.

### [Shoulder part]

The shoulder part is located between the tread part and the sidewall part, connecting the sidewall part located on the side surface of the tire and the tread part of the tire. The shoulder part has the largest thickness among tire components and is thus designed such that heat generated inside while running can be easily released to the outside.

For example, the shoulder part may have a rounder shoulder structure or a square shoulder structure.

The shoulder part may be formed using a rubber composition for tread, and the composition of constitutive components thereof may be appropriately selected by a person skilled in the art according to desired properties.

### [Sidewall part]

The sidewall part refers to a side portion of the tire extending from the shoulder toward the bead and serves the function of protecting the carcass part inside the tire. In particular, the sidewall part serves the function of absorbing shock transmitted during vertical movement of the tire as well as the function of accommodating repeated expansion and contraction of the tire while the transportation equipment is running.

The sidewall part may be made of a rubber composition including rubber base and a tire cord.

For example, the rubber base may include natural rubber, synthetic rubber, modified natural rubber, or a combination thereof.

More information on the natural rubber and synthetic rubber can be found in the description above.

The modified natural rubber is obtained by performing a modification or purification process on natural rubber so as to improve compatibility and physical properties of common natural rubber, and examples of such modified natural rubber include epoxidized natural rubber, deproteinized natural rubber, hydrogenated natural rubber, and the like.

More information on the tire cord can be found in the description given above with respect to the tread part, and the tire cord may utilize aramid fibers in the interest of improvement in shock absorption properties.

In addition to the rubber base and tire cord described above, various additives such as a homogenizer, a reinforcing agent, a vulcanization aid, sulfur, a vulcanization accelerator, a vegetable oil, and an anti-aging agent, may be further added, as necessary, to a rubber composition used in the production of a sidewall part.

The contents of components of the rubber composition used in preparation of the sidewall part may be appropriately selected and implemented by a person skilled in the art for desired properties.

### [Bead part]

The bead part is a part of the tire that touches the wheel and serves the function of fixing the tire to the wheel and maintaining airtightness when inflated with air.

The bead part may include one or more steel wires coated with rubber and the one or more steel wires may exist in a state where they are twisted with each other.

### [Belt part]

The belt part is located below the tread part and serves the function of maintaining the contact area of the tread part, cushioning an external impact transmitted from the tread part, and supporting a load exerted on the tire.

The belt part may be made of a rubber composition including a rubber base and a tire cord. Here, the tire cord may be placed in a radial direction of the tire to be able to withstand an external force applied in a radial direction of the tire.

For example, the rubber base may include natural rubber, synthetic rubber, a modified natural rubber, or a combination thereof.

The description provided for the tread part may be referred to for the natural rubber and synthetic rubber, and the description provided for the sidewall part above may be referred to for the modified natural rubber.

The description provided with respect to the tread part above may be referred to for the tire cord.

The rubber composition for the belt part may further include an adhesive for secure bonding with the tire cord. Examples of the adhesive may include latex, rosin-based resin, terpene-phenolic resin, aliphatic petroleum resin, aromatic petroleum resin, dicyclopentadiene-based petroleum resin, and the like.

The ratios of components of the rubber composition for the belt part may be appropriately selected and implemented for desired properties, by a person skilled in the art.

### [Inner liner part]

The inner liner part may include the above-described gas-barrier film. Also, in the inner liner part, the above-described gas-barrier film and a polyamide-based gas-barrier film prepared by a rubber composition including a mixture of rubber base and a polyamide-based resin may be used together.

For example, the inner liner part may be formed in a monolayer structure of a gas-barrier film according to an embodiment of the present invention, or may have a multilayer structure including a polyamide-based gas-barrier film layer and a gas-barrier film layer according to an embodiment of the present invention.

For example, such a polyamide-based gas-barrier film may include a copolymer including a polyamide monomer and a polyether monomer, or a mixture of a polymer including a polyamide monomer and a polymer including a polyether monomer.

The proportion of polyamide monomers included in the polyamide-based gas-barrier film may be higher than the proportion of polyether monomers. For example, a weight ratio of polyamide monomers and polyether monomers included in the gas-barrier film may be 9.5:0.5 to 5.5:4.5.

The polyamide monomer may be, for example, a main repeating unit included in one of polyamide-based resin selected from the group consisting of Nylon 6, Nylon 66, Nylon 46, Nylon 11, Nylon 12, Nylon 610, Nylon 612, Nylon 6/66 copolymer, Nylon 6/66/610 copolymer, Nylon MXD6, Nylon 6T, Nylon 6/6T copolymer, Nylon 66/PP copolymer, Nylon 66/PPS copolymer, a methoxymethylated product of 6-Nylon, a methoxymethylated product of 6-610-Nylon, and a methoxymethylated product of 612-Nylon.

The polyether-based monomer may be, for example, a main repeating unit included in one polyether-based resin selected from the group consisting of polyethylene glycol, polypropylene glycol, polytetramethylene glycol, polyoxyethylene diamine, polyoxypropylene diamine, polyoxytetramethylene diamine, and copolymers thereof.

The inner liner part may include an additional adhesive film on a surface thereof to maintain secure bonding with neighboring components. The adhesive film may be a single layer or multiple layers. If the adhesive film is multiple layers, one layer of the multiple layers may be a release film including an oxygen barrier film. The oxygen barrier film may include a gas-barrier film according to an embodiment of the present invention.

The thickness of the inner liner part is not particularly limited and may be appropriately selected and implemented by a person skilled in the art in view of energy efficiency of transportation equipment and resistance to air permeation.

### [Carcass part]

The carcass part is positioned above the inner liner part to form the frame of a tire and serves the functions of maintaining the frame of the tire, maintaining the air pressure inside, and cushioning against external impact.

The carcass part may be composed of a rubber composition including rubber base and a tire cord material and the tire cord material may be positioned in a radial direction so as to be able to withstand a force exerted in a radial direction of the tire.

For example, the rubber base may include natural rubber, synthetic rubber, a modified natural rubber, or a combination thereof.

The description provided with respect to the tread part may be referred to for the natural rubber and synthetic rubber, and the description provided with respect to the sidewall part above may be referred to for the modified natural rubber.

The description provided with respect to the tread part above may be referred to for the tire cord.

The rubber composition for carcass may further include the above-described adhesive for secure bonding with a tire cord.

The ratios of components of the rubber composition for carcass may be appropriately selected and implemented for desired properties, by a person skilled in the art.

### [Cap ply part]

A cap ply part is positioned between a belt part and a tread part to serve the purpose of securing the belt part.

The cap ply part may be composed of rayon, nylon, polyester, aramid, or steel. For example, the cap ply part may be composed of a nylon film.

The cap ply part may further include, as necessary, an adhesive to enhance adhesiveness.

Examples of the adhesive may include latex, rosin-based resin, terpene-phenolic resin, aliphatic petroleum resin, aromatic petroleum resin, dicyclopentadiene-based petroleum resin, and the like.

In addition, the cap ply part may further include one or more from among a heat resistant agent, an antioxidant, a stabilizer, a reinforcing agent, a defoamer, and a filler, as necessary.

The ratios of material components of the cap ply part may be appropriately selected and implemented by a person skilled in the art for desired properties.

Hereinafter, the present invention will be described in greater detail by way of Examples and the like, but the scope and content of the present invention should not be construed as being reduced or limited by the Examples below. In addition, when viewed in light of the disclosure of the present invention including the following examples, it is apparent that a person skilled in the art can easily practice the present invention for which no specific experimental results are presented, and that such modifications and changes fall within the scope of the claims.

In addition, the experimental results presented below describe only the representative experimental results of Examples and Comparative Examples, and the effects of each of various embodiments of the present invention that are not explicitly presented below will be described in detail in the corresponding part.

### [EXAMPLES]

### (Preparation of Resin Composition)

### Preparation Example 1

After adding 2.5 parts by weight of n-dodecyl mercaptan as molecular weight modifier with respect to 100 parts by weight of a composition consisting of 93 wt% of refined C₉ fraction (YCNCC) and 7 wt% of viscosity modifier LP200 (Kolon Industries), a polymerization reaction was conducted for 2 hours at 260 °C and a high pressure (5 to 10 bar). In a case in which polymerization catalyst, BF₃, was added, the polymerization reaction was conducted for 2 hours at 180 °C and a high pressure (5 to 10 bar). Fully polymerized products were subject to a degassing process to remove unreacted reactants, to prepare a resin composition for use as an additive.

### Preparation Example 2

A resin composition was prepared by blending the additive prepared in Preparation Example 1 and a C9/DCPD copolymer resin (SU-400 or SU-490) in a weight ratio of 3:7 at a high temperature (100 °C to 180 °C).

### Preparation Example 3

A resin composition was prepared by blending the additive prepared in Example 1 and a C9/DCPD copolymer resin (SU-400 or SU-490) in a weight ratio of 1:9 at a high temperature (100 °C to 180 °C).

### Experimental Example 1: Evaluation of Resin Compositions

The glass transition temperature, softening point, viscosity, number average molecular weight, and aromaticity of the resin compositions prepared in Preparation Examples 1 to 3 were measured and are shown in Table 1 below.

The glass transition temperature was measured through DSC analysis.

The softening point was measured using the Ring and ball softening method (ASTM E 28). Resin was melted and introduced into a mold in the shape of a ring, a beaker containing glycerine was placed thereon, and a ball was placed on the ring containing the resin. Then, the temperature was increased by 2.5 °C every minute and the temperature at which the resin melted to cause the ball to fall was measured (softening point).

The viscosity was measured using Brookfield viscometer (ASTM D3236) and using spindle #27.

The number average molecular weight was determined as a polystyrene equivalent number average molecular weight (Mn) by gel permeation chromatography (manufactured by Hewlett-Packard, model name: HP-1100).

The aromaticity was determined through NMR analysis.

**[Table 1]**

| | Preparation Example 1 | Preparation Example 2 | Preparation Example 3 |
|---|---|---|---|
| Glass transition temperature (°C) | -20 | 30 | 40 |
| Softening point (°C) | - | 60 | 80 |
| Viscosity (@60°C, cps) | 2700 | - | - |
| Number average molecular weight (Mn) | 240 | 310 | 330 |
| Aromaticity(%) | 37 | 26 | 11 |

### (Preparation of Rubber Samples)

### Example 1

100 parts by weight of a rubber base consisting of 80 parts by weight of chlorinated butyl rubber (HT-1066, manufactured by Exxon Chemicals) and 20 parts by weight of natural rubber (NR, manufactured by Sritrang), 10 parts by weight of the resin composition prepared in Preparation Example 2, 4 parts by weight of a homogenizing agent (40MS, manufactured by Strucktol), 60 parts by weight of carbon black (N-660, Pentacarbon), 3 parts by weight of zinc oxide (ZnO, manufactured by Kemai Chem), and 2 parts by weight of stearic acid (made by Kemai Chem) were placed in a Banbury mixer and mixed at 150 °C, and then the primary compounding rubber was released. Then, the primary compounding rubber was combined with 0.5 parts by weight of sulfur (manufactured by Miwon Chem) and 1.2 parts by weight of a vulcanization accelerator (DM, dibenzothiazole disulfide, manufactured by Sunsine) in a Banbury mixer and vulcanized at 100 °C and then released, to produce a rubber sample.

### Example 2

A rubber sample was prepared following the same process as Example 1, except that 10 parts by weight of the resin composition prepared in Preparation Example 3 was used instead of the resin composition prepared in Preparation Example 2 when preparing the rubber sample.

### Comparative Example 1

A rubber sample was prepared following the same process as Example 1, except that 10 parts by weight of the additive prepared in Preparation Example 1 was used instead of the resin composition prepared in Preparation Example 2 when preparing the rubber sample.

### Comparative Example 2

A rubber sample was prepared following the same process as Example 1, except that 10 parts by weight of process oil (TDAE, manufactured by H&R) was used instead of the resin composition prepared in Preparation Example 2 when preparing the rubber sample.

### Comparative Example 3

A rubber sample was prepared following the same process as Example 1, except that 10 parts by weight of a paraffin oil (manufactured by MICHANG OIL IND.) was used instead of the resin composition prepared in Preparation Example 2 when preparing the rubber sample.

### Comparative Example 4

A rubber sample was prepared following the same process as Example 1, except that 10 parts by weight of naphthene oil (manufactured by MICHANG OIL IND.) was used instead of the resin composition prepared in Preparation Example 2 when preparing the rubber sample.

### Comparative Example 5

A rubber sample was prepared following the same process as Example 1, except that 10 parts by weight of 40MS (manufactured by Strucktol) was used instead of the resin composition prepared in Preparation Example 2 when preparing the rubber sample.

### Comparative Example 6

A rubber sample was prepared following the same process as Example 1, except that 10 parts by weight of C9/DCPD copolymer resin (manufactured by SU-400 Kolon Inc.) was used instead of the resin composition prepared in Preparation Example 2 when preparing the rubber sample.

### Experimental Example 2: Evaluation of Physical Properties of Rubber Sample

Physical properties were measured for each of the rubber specimens prepared in Examples 1 to 2 and Comparative Examples 1 to 6, and the results thereof are shown in Table 2 below.

**[Table 2]**

| Item | | Exam ple 1 | Exam ple 2 | Compa rative Exampl e 1 | Compa rative Exampl e 2 | Comp arative Exam ple 3 | Comp arative Examp le 4 | Compar ative Exampl e 5 | Compa rative Exampl e 6 |
|---|---|---|---|---|---|---|---|---|---|
| Rheom eter¹) | Toq(Max) | 11.1 | 11.8 | 11.3 | 11.2 | 12.5 | 11.7 | 12.6 | 11.9 |
| | Toq(Min) | 2.4 | 2.5 | 2.3 | 2.3 | 2.1 | 2.2 | 2.8 | 2.5 |
| | Tc50 | 5:54 | 6:22 | 5:25 | 5:44 | 6:00 | 6:12 | 6:57 | 6:30 |
| | Tc90 | 9:25 | 10:24 | 8:42 | 9:33 | 9:55 | 10:10 | 11:06 | 10:33 |
| Moone y viscosit y²) | 100 °C | 66 | 69 | 64 | 69 | 62 | 63 | 75 | 70 |
| | 125 °C, T05 | 37:57 | 40:44 | 33:55 | 33:58 | 31:34 | 38:33 | 39:33 | 41:23 |
| UTM Properti es³) | Hardness | 47 | 49 | 46 | 47 | 47 | 46 | 50 | 50 |
| | 100% Modulus | 20 | 21 | 19 | 20 | 22 | 20 | 25 | 22 |
| | 300% Modulus | 60 | 61 | 56 | 60 | 66 | 59 | 63 | 62 |
| | Tensile Strength (T. S.) | 110 | 107 | 112 | 115 | 115 | 114 | 119 | 106 |
| | Elongation at break (E.B.) | 589 | 588 | 645 | 631 | 563 | 624 | 621 | 586 |
| Gas permeation rate⁴⁾ (cm³/(m²dayatm)) | | 132 | 125 | 141 | 184 | 236 | 204 | 170 | 117 |
| Tg(DMA) | | -17.5 | -16.8 | -22.3 | -21.3 | -25.8 | -23.5 | -20.5 | -15.8 |
| Note 1) Rheometer: measured according to ASTM D 5289 using MDR 2000E (Monsanto; St. Louis, Mo.) | | | | | | | | | |
| Note 2: Mooney viscosity: measured using a sample sized 25±3 cm³ prepared and placed in a chamber, by changing temperature to 30-200 °C and using Mooney Viscometer MV-2000 (LABTECH) | | | | | | | | | |
| Note 3) UTM properties: measured while elongated at 500 mm/min using the measuring device U.T.M - Shimadzu AG-1S (Load cell: PFG-5kN) in accordance with ASTM D412. | | | | | | | | | |
| Note 4) Gas permeability: measured under atmosphere at 25 °C, 60 RH% using Oxygen Permeation Analyzer (Model 2/61, Mocon Inc.) in accordance with KS M ISO 2556:2006 method. | | | | | | | | | |

Rheometer results measured by a rubber rheometer are parameters related to the curing rate and behavior of a rubber composition during a process application, and are related to the processability in tire manufacturing. Here, if the values (Toq(Min), Toq(Max)) are either too high or too low, it indicates that application to the existing process is difficult and a new process design is necessary. Compared to the results of Comparative Examples 1 to 4, it can be seen that the results of Example 1 shown in Table 2, including Toq(Min), Toq(Max), Tc50 (time to achieve 50% cure), Tc90 (time to achieve 90% cure) correspond to specifications that can be easily applied to the existing process.

Also, the Mooney viscosity results and mechanical properties (modulus, tensile strength, elongation, hardness, etc.) shown in Table 2 suggest that the results of Examples 1 and 2 are comparable or superior to the results of Comparative Examples 2 to 5.

Meanwhile, the gas permeation rate and Tg value are values related to resistance to air permeation and processability, respectively. The lower the gas permeation rate, the higher the utility as a tire inner liner, and the lower the Tg value, the more advantageous in the processing process.

In this regard, the gas permeation rates of Examples 1 and 2 were 132 and 125 cm³/(m²·day·atm), indicating a significantly improved gas permeation rate compared to the rubber samples of Comparative Examples 1 to 5.

In addition, it was found that Examples 1 and 2 have a lower Tg value compared to Comparative Example 6 and thus have improved processability.

From this result, it could be confirmed that the rubber composition for tire inner liners according to the present invention not only satisfies basic properties required of a tire component, e.g., tensile strength, wear resistance, durability and hardness, but also significantly improves processability and resistance to air permeation at the same time.

## Claims

1. A resin composition comprising:
a base resin comprising a non-hydrogenated or at least partially hydrogenated petroleum resin; and an additive comprising a modified petroleum resin having a structure in which a molecular weight modifier is bonded to at least one end of the two ends of a non-hydrogenated or at least partially hydrogenated petroleum resin.

2. The resin composition of claim 1,
wherein a weight ratio of the base resin and the additive in the composition is 12:1 to 1:12.

3. The resin composition of claim 1,
wherein the base resin has
a molecular weight (Mw) of 200 to 2,000,
a softening point of 80 °C to 150 °C,
a viscosity measured at 160 °C of 250 cps to 2,000 cps, and
a glass transition temperature of 30 °C to 100 °C.

4. The resin composition of claim 1,
wherein the base resin comprises a petroleum resin polymer in which one or more selected from among a C₅ monomer, mixed C₅ fraction, a C₉ monomer, mixed C₉ fraction, a cyclic diolefin monomer, and a linear olefin monomer are polymerized, or a hydrogenated petroleum resin in which at least a portion of the petroleum resin polymer is hydrogenated.

5. The resin composition of claim 4,
wherein the base resin comprises a copolymer of mixed C₉ fraction and a cyclic-diolefin, a hydrogenated copolymer in which at least a portion of the copolymer is hydrogenated, or a combination thereof.

6. The resin composition of claim 1,
wherein the molecular weight modifier includes ethyl mercaptan, butyl mercaptan, hexyl mercaptan, dodecyl mercaptan, phenyl mercaptan, benzyl mercaptan, mercaptoethanol, thiolglycolic acid, mercaptopropionic acid, pentaerythritol tetrakis(3-mercapto)propinonate, or a combination thereof.

7. The resin composition of claim 1,
wherein the additive further comprises a viscosity modifier.

8. The resin composition of claim 7,
wherein the viscosity modifier includes a low-viscosity resin having a viscosity at 25 °C of 20 cps to 500 cps.

9. The resin composition of claim 7,
wherein the viscosity modifier includes a low viscosity resin, and
the low-viscosity resin includes hydrogenated DCPD-C₉ copolymer resins, hydrogenated DCPD resins, or a combination thereof.

10. The resin composition of claim 1,
wherein the resin composition has
a number average molecular weight (Mn) of 100 to 550,
a glass transition temperature of 0 °C to 60 °C, and
a softening point of 50 °C to 90 °C.

11. The resin composition of claim 1,
wherein the resin composition has an aromaticity of 5 % to 35 %.

12. A rubber composition comprising:
a rubber base; and
the resin composition according to any one of claims 1 to 11,
wherein the resin composition is included in an amount of 1 to 50 parts by weight with respect to 100 parts by weight of the rubber base.

13. The rubber composition of claim 12,
wherein the rubber composition is free of process oils.

14. The rubber composition of claim 12,
wherein the rubber composition, after prepared as a rubber specimen, has a gas permeability of 150 cm³/(m²·day·atm) or less, measured according to KS M ISO 2556, and
a glass transition temperature (Tg) of -16 °C or less.

15. A tire comprising the rubber composition according to claim 12.

## Patentansprüche

1. Eine Harzzusammensetzung, umfassend:
ein Basisharz, umfassend ein nicht-hydriertes oder mindestens teilweise hydriertes Petrolharz; und ein Additiv, umfassend ein modifiziertes Petrolharz mit einer Struktur, bei der ein Molekulargewichtsmodifikator an mindestens ein Ende der beiden Enden eines nicht-hydrierten oder mindestens teilweise hydrierten Petrolharzes gebunden ist.

2. Die Harzzusammensetzung nach Anspruch 1,
wobei ein Gewichtsverhältnis des Basisharzes und des Additivs in der Zusammensetzung 12:1 bis 1:12 beträgt.

3. Die Harzzusammensetzung nach Anspruch 1,
wobei das Basisharz
ein Molekulargewicht (Mw) von 200 bis 2.000,
einen Erweichungspunkt von 80°C bis 150°C,
eine Viskosität, gemessen bei 160°C, von 250 cP bis 2.000 cP, und
eine Glasübergangstemperatur von 30°C bis 100°C
aufweist.

4. Die Harzzusammensetzung nach Anspruch 1,
wobei das Basisharz ein Petrolharzpolymer, bei dem eines oder mehrere, ausgewählt aus einem C₅-Monomer, einer C₅-Mischfraktion, einem C₉-Monomer, einer C₉-Mischfraktion, einem cyclischen Diolefin-Monomer und einem linearen OlefinMonomer, polymerisiert sind, oder ein hydriertes Petrolharz, bei dem mindestens ein Teil des Petrolharzpolymers hydriert ist, umfasst.

5. Die Harzzusammensetzung nach Anspruch 4,
wobei das Basisharz ein Copolymer aus einer C₉-Mischfraktion und einem cyclischen Diolefin, ein hydriertes Copolymer, bei dem mindestens ein Teil des Copolymers hydriert ist, oder eine Kombination davon umfasst.

6. Die Harzzusammensetzung nach Anspruch 1,
wobei der Molekulargewichtsmodifikator Ethylmercaptan, Butylmercaptan, Hexylmercaptan, Dodecylmercaptan, Phenylmercaptan, Benzylmercaptan, Mercaptoethanol, Thiolglycolsäure, Mercaptopropionsäure, Pentaerythrittetrakis(3-mercapto)propionat oder eine Kombination davon beinhaltet.

7. Die Harzzusammensetzung nach Anspruch 1,
wobei das Additiv ferner einen Viskositätsmodifikator umfasst.

8. Die Harzzusammensetzung nach Anspruch 7,
wobei der Viskositätsmodifikator ein niederviskoses Harz mit einer Viskosität bei 25°C von 20 cP bis 500 cP beinhaltet.

9. Die Harzzusammensetzung nach Anspruch 7,
wobei der Viskositätsmodifikator ein niederviskoses Harz beinhaltet und
das niederviskose Harz hydrierte DCPD-C₉-Copolymerharze, hydrierte DCPD-Harze oder eine Kombination davon beinhaltet.

10. Die Harzzusammensetzung nach Anspruch 1,
wobei die Harzzusammensetzung
ein Zahlenmittel des Molekulargewichts (Mn) von 100 bis 550,
eine Glasübergangstemperatur von 0°C bis 60°C und
einen Erweichungspunkt von 50°C bis 90°C
aufweist.

11. Die Harzzusammensetzung nach Anspruch 1,
wobei die Harzzusammensetzung eine Aromatizität von 5% bis 35% aufweist.

12. Eine Kautschukzusammensetzung, umfassend:
eine Kautschukbasis; und
die Harzzusammensetzung nach einem der Ansprüche 1 bis 11,
wobei die Harzzusammensetzung in einer Menge von 1 bis 50 Gewichtsteilen, bezogen auf 100 Gewichtsteile der Kautschukbasis, enthalten ist.

13. Die Kautschukzusammensetzung nach Anspruch 12,
wobei die Kautschukzusammensetzung frei von Prozessölen ist.

14. Die Kautschukzusammensetzung nach Anspruch 12,
wobei die Kautschukzusammensetzung, nachdem sie als Kautschukprüfstück hergestellt wurde, eine Gasdurchlässigkeit von 150 cm³/(m²·Tag·atm) oder weniger, gemessen gemäß KS M ISO 2556, und
eine Glasübergangstemperatur (Tg) von -16°C oder weniger aufweist.

15. Ein Reifen, umfassend die Kautschukzusammensetzung nach Anspruch 12.

## Revendications

1. Composition de résine comprenant :
une résine de base comprenant une résine de pétrole non hydrogénée ou au moins partiellement hydrogénée ; et un additif comprenant une résine de pétrole modifiée ayant une structure dans laquelle un modificateur de masse moléculaire est lié à au moins une extrémité parmi les deux extrémités d'une résine de pétrole non hydrogénée ou au moins partiellement hydrogénée.

2. Composition de résine selon la revendication 1,
dans laquelle le rapport en poids de la résine de base à l'additif dans la composition est de 12 :1 à 1 :12.

3. Composition de résine selon la revendication 1,
dans laquelle la résine de base a
une masse moléculaire (Mw) de 200 à 2 000,
un point de ramollissement de 80 °C à 150 °C,
une viscosité, mesurée à 160 °C, de 250 cps à 2 000 cps, et
une température de transition vitreuse de 30 °C à 100 °C.

4. Composition de résine selon la revendication 1,
dans laquelle la résine de base comprend un polymère de résine de pétrole dans lequel un ou plusieurs choisis parmi un monomère en C₅, une fraction mixte en C₅, un monomère en C₉, une fraction mixte en C₉, un monomère de dioléfine cyclique, et un monomère d'oléfine linéaire sont polymérisés, ou une résine de pétrole hydrogénée dans laquelle au moins une portion du polymère de résine de pétrole est hydrogénée.

5. Composition de résine selon la revendication 4,
dans laquelle la résine de base comprend un copolymère de fraction mixte en C₉ et d'une dioléfine cyclique, un copolymère hydrogéné dans lequel au moins une portion du copolymère est hydrogénée, ou une de leurs combinaisons.

6. Composition de résine selon la revendication 1,
dans laquelle le modificateur de masse moléculaire inclut l'éthylmercaptan, le butylmercaptan, l'hexylmercaptan, le dodécylmercaptan, le phénylmercaptan, le benzylmercaptan, le mercaptoéthanol, l'acide thioglycolique, l'acide mercaptopropionique, le tétrakis(3-mercapto)propionate de pentaérythritol, ou une de leurs combinaisons.

7. Composition de résine selon la revendication 1,
dans laquelle l'additif comprend en outre un modificateur de viscosité.

8. Composition de résine selon la revendication 7,
dans laquelle le modificateur de viscosité inclut une résine de faible viscosité ayant une viscosité à 25 °C de 20 cps à 500 cps.

9. Composition de résine selon la revendication 7,
dans laquelle le modificateur de viscosité inclut une résine de faible viscosité, et
la résine de faible viscosité inclut les résines de copolymère DCPD-C₉ hydrogénées, les résines de DCPD hydrogénées, ou une de leurs combinaisons.

10. Composition de résine selon la revendication 1,
dans laquelle la composition de résine a
une masse moléculaire moyenne en nombre (Mn) de 100 à 550,
une température de transition vitreuse de 0 °C à 60 °C, et
un point de ramollissement de 50 °C à 90 °C.

11. Composition de résine selon la revendication 1,
dans laquelle la composition de résine a une aromaticité de 5 % à 35 %.

12. Composition de caoutchouc comprenant :
une base de caoutchouc ; et
la composition de résine selon l'une quelconque des revendications 1 à 11,
dans laquelle la composition de résine est incluse en une quantité de 1 à 50 parties en poids pour 100 parties en poids de la base de caoutchouc.

13. Composition de caoutchouc selon la revendication 12,
dans laquelle la composition de caoutchouc est exempte d'huiles de procédé.

14. Composition de caoutchouc selon la revendication 12,
dans laquelle la composition de caoutchouc, après avoir été préparée sous la forme d'un échantillon de caoutchouc, a une perméabilité aux gaz de 150 cm³/(m²·jour·atm) ou moins, mesurée conformément à KS M ISO 2556, et
une température de transition vitreuse (Tg) de -16 °C ou moins.

15. Pneu comprenant la composition de caoutchouc selon la revendication 12.
